# EUROPEAN PATENT APPLICATION

(11) **EP 4 749 620 A1**
(43) Date of publication of application: **27.05.2026**
(21) Application number: 25205732.8
(22) Date of filing: 30.09.2025
(51) Int. Cl.: G11B 27/031, H04N 21/854

(54) **METHOD AND APPARATUS FOR GENERATING A MEDIA WORK, DEVICE, AND MEDIUM**

(30) Priority: 20.11.2024 CN 202411667977
(71) Applicant: Beijing Zitiao Network Technology Co., Ltd., Beijing 100190 (CN)
(72) Inventor: Huang, Bin, Beijing, 100028 (CN); Yang, Qing, Beijing, 100028 (CN); Xu, Qiuhong, Beijing, 100028 (CN); Huang, Jinxue, Beijing, 100028 (CN)
(74) Representative: Marks & Clerk LLP

(57) **Abstract**

Embodiments of the present disclosure provides a method and an apparatus for generating a media work, a device and a medium. The method includes: displaying a creation page in response to an operation instruction for a media application, where the creation page displays a creation control; displaying a work generation page in response to an interaction instruction for the creation control; displaying a first media work on the work generation page in response to an input instruction of description information in the work generation page, where the description information includes prompt information and a material; displaying a work processing page in response to a publication instruction of publishing the first media work to the media application; and obtaining a second media work in response to a processing instruction for the first media work on the work processing page, where the second media work is used for being published to the media application.

## Description

### CROSS-REFERENCE TO RELATED APPLICATION

This application claims the priority to and benefits of the Chinese Patent Application, No.202411667977.9 which was filed on November 20, 2024. All the aforementioned patent applications are hereby incorporated by reference in their entireties.

### TECHNICAL FIELD

The present disclosure relates to the technical field of computers, and more particularly relates to a method and apparatus for generating a media work, a device, a medium, and a program product.

### BACKGROUND

The creation costs and thresholds of media works are relatively high, and there are relatively high requirements for media professionals. This makes it difficult for ordinary media professionals to consistently create new media works. Therefore, this will lead to relatively low generation efficiency of the media works.

### SUMMARY

In view of the above, the present disclosure provides a method and apparatus for generating a media work, a device, a medium, and a program product, so as to solve the problem of relatively low generation efficiency of the media work.

At least one embodiment of the present disclosure provides a method for generating a media work, and the method includes:
displaying a creation page in response to an operation instruction for a media application, where the creation page displays a creation control;
displaying a work generation page in response to an interaction instruction for the creation control;
displaying a first media work on the work generation page in response to an input instruction of description information in the work generation page, where the description information includes prompt information and a material;
displaying a work processing page in response to a publication instruction of publishing the first media work to the media application; and
obtaining a second media work in response to a processing instruction for the first media work on the work processing page, where the second media work is used for being published to the media application.

At least one embodiment of the present disclosure provides an apparatus for generating a media work, and the apparatus includes:
a creation page display module, configured to display a creation page in response to an operation instruction for a media application, where the creation page displays a creation control;
a work generation page display module, configured to display a work generation page in response to an interaction instruction for the creation control;
a first media work display module, configured to display a first media work on the work generation page in response to an input instruction of description information in the work generation page, where the description information includes prompt information and a material;
a work processing page display module, configured to display a work processing page in response to a publication instruction of publishing the first media work to the media application; and
a second media work generation module, configured to obtain a second media work in response to a processing instruction for the first media work on the work processing page, where the second media work is used for being published to the media application.

At least one embodiment of the present disclosure provides an electronic device, including: a memory and a processor, where the memory and the processor are communicatively connected with each other, the memory has computer instructions stored therein, and the processor executes the computer instructions to execute the method for generating a media work according to any one of embodiment of described above.

At least one embodiment of the present disclosure provides a computer-readable storage medium having computer instructions stored thereon, where the computer instructions are used for causing a computer to execute the method for generating a media work according to any embodiment of described above.

At least one embodiment of the present disclosure provides a computer program product, including computer instructions, where the computer instructions are used for causing a computer to execute the method for generating a media work according to any embodiment of the described above.

### BRIEF DESCRIPTION OF DRAWINGS

In order to more clearly illustrate the technical solutions in the embodiments of the present disclosure, the following briefly introduces the drawings that need to be used in the description of the embodiments. The drawings herein are incorporated into and constitute a part of this specification. It is obvious that the following drawings only show some embodiments of the present disclosure, and for those of ordinary skill in the art, other related drawings may also be obtained from these drawings without creative efforts.
Fig. 1 is a schematic flow diagram of a method for generating a media work according to an embodiment of the present disclosure;
Fig. 2 is a schematic diagram of a creation page according to an embodiment of the present disclosure;
Fig. 3 is a schematic diagram of a work generation page according to an embodiment of the present disclosure;
Fig. 4 is a schematic diagram of yet another work generation page according to an embodiment of the present disclosure;
Fig. 5 is a schematic diagram of yet another work generation page according to an embodiment of the present disclosure;
Fig. 6 is a schematic diagram of yet another work generation page according to an embodiment of the present disclosure;
Fig. 7 is a schematic diagram of yet another work generation page according to an embodiment of the present disclosure;
Fig. 8 is a schematic diagram of yet another work generation page according to an embodiment of the present disclosure;
Fig. 9 is a schematic diagram of a work processing page according to an embodiment of the present disclosure;
Fig. 10 is a schematic diagram of yet another work generation page according to an embodiment of the present disclosure;
Fig. 11 is a schematic diagram of yet another work generation page according to an embodiment of the present disclosure;
Fig. 12 is a schematic diagram of yet another work processing page according to an embodiment of the present disclosure;
Fig. 13 is a schematic diagram of a functional page according to an embodiment of the present disclosure;
Fig. 14 is a schematic diagram of yet another functional page according to an embodiment of the present disclosure;
Fig. 15 is a schematic diagram of yet another functional page according to an embodiment of the present disclosure;
Fig. 16 is a block diagram of a structure of an apparatus for generating a media work according to an embodiment of the present disclosure; and
Fig. 17 is a schematic diagram of a hardware structure of an electronic device according to an embodiment of the present disclosure.

### DETAILED DESCRIPTION

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are only part of the embodiments of the present disclosure, not all of them. Based on the embodiments of the present disclosure, all other embodiments obtained by those skilled in the art without creative efforts belong to the protection scope of the present disclosure.

It may be understood that before using the technical solutions disclosed in the embodiments of the present disclosure, the user should be informed of the type, range of use, use scenarios, etc. of personal information involved in the present disclosure and obtain the authorization of the user in an appropriate manner in accordance with relevant laws and regulations.

For example, upon receiving an active request from a user, a prompt is delivered to the user to explicitly inform them that the requested operation will require the collection and use of their personal information. In this way, the user can autonomously decide whether to supply personal information to the software or hardware-such as the electronic device, application, server, or storage medium-responsible for executing the disclosed technical solution.

As an optional but non-limiting implementation, the prompt may be presented in a pop-up window that appears in response to the user's active request. The pop-up can display the notice textually and can also contain selectable controls (e.g., "Agree" or "Disagree") allowing the user to indicate whether they consent to providing personal information to the electronic device.

It should be understood that the above notification and authorization process is merely illustrative and does not restrict the disclosed implementations; any alternative approach that complies with relevant laws and regulations may also be employed.

It should be understood that data involved in this technical solution (including but not limited to data itself and the acquisition or use of the data) shall comply with the requirements of corresponding laws and regulations as well as relevant provisions.

In the related art, a media work may be generated by giving a keyword in a media creation tool, and this creation process needs to be prepared with a music creation tool. In addition, after the media work is generated, when the media work needs to be published, the media work also needs to be imported into a media application, and this process may lead to relatively low generation efficiency of the media work.

Based on this, at least one embodiment of the present disclosure provides a method for generating a media work. By providing a creation control in a creation page of a media application, and interacting with the creation control to trigger the display of a work generation page. In the work generation page, a first media work may be generated through an input instruction of description information. In addition, since the creation process is implemented in the media application, the created first media work may be directly published in the media application, and a second media work for publication is obtained by processing the first media work on a work processing page during publication and processing. Therefore, the method achieves the creation, processing and publication of the media work in the media application without introducing additional music creation tools.

According to an embodiment of the present disclosure, an embodiment of a method for generating a media work is provided. It should be noted that steps illustrated in a flowchart of the drawings may be executed in a computer system such as a set of computer-executable instructions, and although a logical order is illustrated in the flowchart, in some instances, the steps illustrated or described may be executed in an order different from that herein.

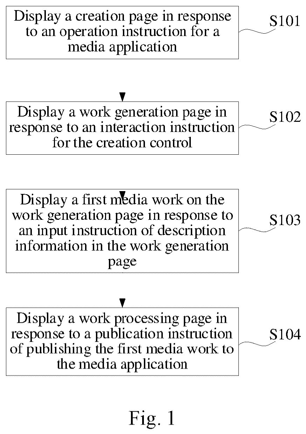

In this embodiment, a method for generating a media work is provided, which may be used in a server. Fig. 1 is a flowchart of a method for generating a media work according to an embodiment of the present disclosure, and as shown in Fig. 1, the flowchart includes the following steps.

S101, display a creation page in response to an operation instruction for a media application.

For example, the creation page displays a creation control.

The media application includes, but is not limited to, a text application, a music playing application, a short video application, a video playing application, and the like. A usage scene thereof is not limited in any way herein, which may be specifically set according to actual demands. After the media application is opened, an operation instruction for the media application is generated through interactive operation, and the creation page of the media application is displayed.

The creation page may be a personal homepage in the media application, and may also be other pages in the media application, and the like. The form of the creation page is not limited in any way herein, which may be specifically set according to actual demands. The creation page has the creation control displayed therein, and a creation instruction is generated through interaction with the creation control, so as to trigger the display of a subsequent work generation page.

The creation control may be in a presentation form of a button or a floating control on the creation page, or may also be displayed in a drop-down menu, and the like.

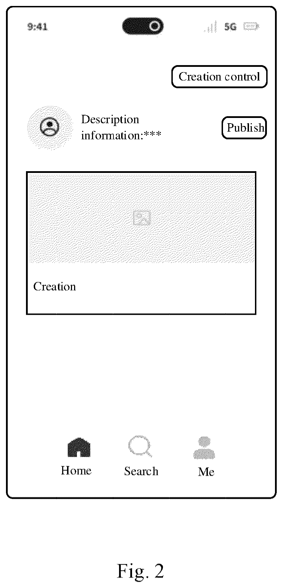

For example, as shown in Fig. 2, the creation page may be the personal homepage of the media application, and description information of the media application, creation information, the creation control, and the like are displayed on the creation page. Of course, the creation page may further include other contents, which are not limited in any way herein.

In addition, the creation page may further include a publication control, and a publication page of the media work may be accessed through interaction with the publication control to achieve the publication of the created media work.

S102, display a work generation page in response to an interaction instruction for the creation control.

The interaction instruction for the creation control is generated through interaction between a user and the creation control, and accordingly, the display of the work generation page is triggered. A corresponding media work is automatically generated on the work generation page by giving prompt information, and displayed on the work generation page.

S103, display a first media work on the work generation page in response to an input instruction of description information in the work generation page.

For example, the description information includes prompt information and a material.

The prompt information is input in the work generation page through interaction between the user and the work generation page to generate the input instruction of the description information, and accordingly, the first media work may be displayed on the work generation page in response to the input instruction of the description information. An input form of the description information includes but is not limited to text, voice, and the like, which is specifically set according to actual demands.

The content of the prompt information may include a prompt instruction, or may be combined with a material on the basis of the prompt instruction, and the like. A form of the material includes but is not limited to a picture, a video, text, and the like, and the specific form is not limited.

The first media work generated according to the prompt information is displayed on the work generation page, the generation of the first media work may be based on a large language model, and the like, and the specific generation process thereof is not limited in any way herein. The first media work may be at least one selected from the group of text, a song, a music video and an on-beat video, which is specifically generated according to the description of the prompt information.

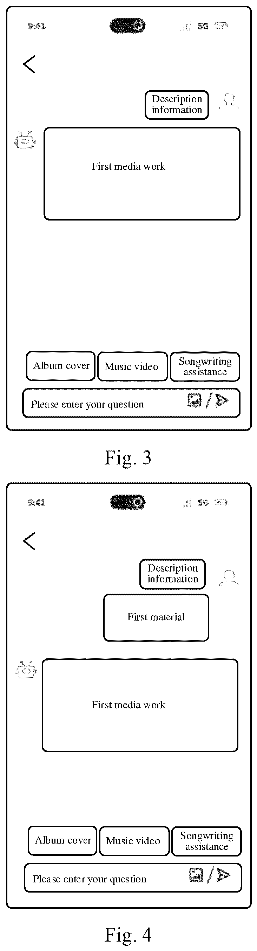

For example, as shown in Fig. 3, after the prompt information is given on the work generation page in an interactive manner, the corresponding first media work is automatically generated and displayed on the work generation page. In the work generation page shown in Fig. 3, the prompt information is input after interaction with an input box in the work generation page.

S104, display a work processing page in response to a publication instruction of publishing the first media work to the media application.

After the first media work is generated, the first media work is published to the media application. Specifically, a publication control may be provided on the work generation page, and the publication instruction is generated through interaction with the publication control. Accordingly, the work processing page is displayed in response to the publication instruction.

In addition, the publication instruction may also be triggered in the form of a shortcut key, and the like, which is not limited to providing the publication control on the work generation page as described above.

S105, obtain a second media work in response to a processing instruction for the first media work on the work processing page.

For example, the second media work is used for being published to the media application.

The work processing page is used for providing processing for the media work, and accordingly, some processing controls, such as clipping, editing and adjustment controls, may be provided on the work processing page, which are specifically provided according to actual scenes.

The processing instruction for the first media work is generated through interaction with the work processing page, and accordingly, the second media work for publication is obtained in response to the processing instruction.

Further, when the first media work is processed, the media application further provides automatic addition of topics and anchor points to ensure that the generated second media work has its own topics and anchor points for publication.

In the method for generating a media work provided by the embodiment of the present disclosure, by triggering the display of a creation page in response to an operation instruction for a media application, the creation page has a creation control displayed therein, the creation control is used for triggering the display of a work generation page. Prompt information is input through interaction with the work generation page, and accordingly, the generated first media work is displayed on the work generation page. Meanwhile, when the first media work is published to the media application, the display of a work processing page is triggered, and the first media work can be processed on the work processing page to obtain a second media work. In the method, the first media work is automatically generated in the media application through the prompt information, and the work processing page is automatically accessed when the first media work is published in the media application, which may trigger processing for the first media work to obtain a second media work. Therefore, the creation, processing and publication of the media work may be achieved through the media application, so that the generation efficiency of the media work is improved.

In some optional embodiments, the above S103 includes: display the first media work on the work generation page in response to input instructions of first prompt information and a first material in the work generation page.

With regard to the generation of the first media work, the first prompt information and the first material are given in the work generation page, and the input instructions are generated according thereto. The first media work is generated on the basis of the first prompt information and the first material. At this time, the first media work is closely related to the first material, and the first material may be a picture, a video, text, and the like, which is not limited in any way herein.

For example, as shown in Fig. 4, the first prompt information and the first material are given on the work generation page in an interactive manner, and accordingly, the generated first media work is displayed on the work generation page. After the first prompt information is provided, a prompt of whether a material is required to be given may be further provided on the work generation page, the first material is input when the material is required to be given, and the first media work is generated directly based on the first prompt information when the material is not required to be given.

The first media work is created according to the first prompt information and the first material, so that there is more reference information in a creation process, thereby facilitating the creation of the media work.

In some optional embodiments, displaying the first media work on the work generation page in response to input instructions of first prompt information and a first material in the work generation page, includes:
a1, display an optional media work on the work generation page in response to the input instructions of the first prompt information and the first material in the work generation page; and
a2, display the first media work on the work generation page in response to an adjustment prompt instruction for the optional media work.

After the optional media work is generated by utilizing the first prompt information and the first material, adjustment prompt information may be further provided to adjust the optional media work to obtain the first media work. For example, after the optional media work is displayed on the work generation page, the optional media work is played through interaction with the optional media work. When the user feels that the optional media work needs to be adjusted in some aspects, interaction with the work generation page is performed again to generate the adjustment prompt instruction, and accordingly, the optional media work is adjusted in response to the adjustment prompt instruction to obtain the first media work.

It should be noted that the number of the optional media works that are generated may be one or more, and the specific number may be set according to actual demands, which is not limited in any way herein.

Further, the adjustment prompt instruction may be used for adjustment to one or more of the optional media works. For example, three optional media works are generated based on the first prompt information and the first material, which are respectively denoted as the optional media work 1 to the optional media work 3. When the user feels that the optional media work 3 needs to be adjusted, the adjustment prompt instruction for the optional media work 3 is input in an interactive manner to adjust the optional media work 3. In an adjustment process, the number of adjustments made may be one or more, and the specific number of adjustments is not limited in any way.

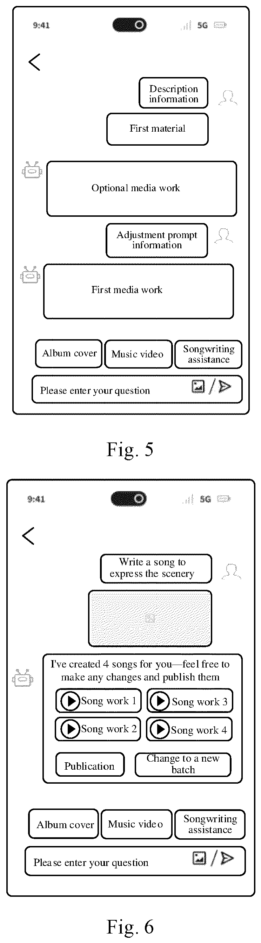

As shown in Fig. 5, the optional media work is displayed on the work generation page, and the optional media work is played through interactive operation. When the optional media work needs to be adjusted in some aspects, adjustment prompt information is further input, and finally the first media work is generated.

On the basis of generating the optional media work by utilizing the first prompt information and the first material, the optional media work may be automatically adjusted by giving the adjustment prompt instruction to obtain the first media work, so that the difficulty of creating the first media works is reduced.

In some optional embodiments, the first material includes at least one selected from a group consisting of: a first picture, a first video and a first option content, where the first media work is a song work.

After the first prompt information is input, the first material may be further given. The first material includes at least one selected from the group of the first picture, the first video and the first option content. Of course, the type and amount of the first material input each time are not limited in any way, which may be specifically given according to actual demands.

The first picture and the first video may be input in a manner of adding a local file, or giving a material extraction address, and the like, or in other manners.

The song work is generated by utilizing at least one selected from the group of the first picture, the first video and the first option content, so that the efficiency of generating the song work can be improved.

In some optional embodiments, in a case that the first media work is the song work, for example, as shown in Fig. 6, the first prompt information "write a song to express the scenery" is input, and the first picture is input. Then the optional media works, namely, the song work 1 to the song work 4, are generated on this basis. The generated song works may be used for publication, and may also trigger regeneration. For example, in the work generation page shown in Fig. 6, controls of "publication" and "change to a new batch" are displayed in areas corresponding to the song work 1 to the song work 4. When interaction with the control of "publication" is performed, the work processing page may be accessed to process the generated song works and then publish the song works; and when interaction with the control of "change to a new batch" is performed, the regeneration of the song works is triggered, and the regeneration still depends on the first prompt information and the first picture which are input last time.

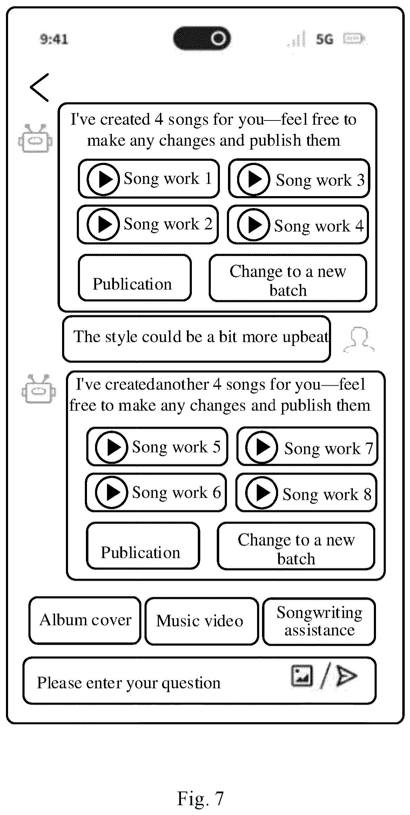

Continuing to be in conjunction with the instance shown in Fig. 6, when the user feels that the song work 1 to the song work 4 need to be adjusted after the song work 1 to the song work 4 are played through interaction, adjustment prompt information, for example, "music style may be more cheerful", may be further given, the adjustment prompt instruction is generated on this basis, and accordingly, the song work 1 to the song work 4 are adjusted in response to the adjustment prompt instruction, so as to obtain the song work 5 to the song work 8 as shown in Fig. 7.

It should be noted that the adjustment to the song work 1 to the song work 4 may be adjusting the music styles thereof on the basis of the song work 1 to the song work 4, which is equivalent to obtaining the song work 5 to the song work 8 after updating the song work 1 to the song work 4. Or, the adjustment may also be understood to combine the first prompt information, the first picture and the adjustment prompt information to regenerate the song, so as to obtain the song work 5 to the song work 8.

In some optional embodiments, in a case that the first material includes the first option content, the displaying the first media work on the work generation page in response to input instructions of first prompt information and a first material in the work generation page, includes:
b1, display at least one first option on the work generation page in response to the input instruction of the first prompt information in the work generation page, where the at least one first option corresponding to at least one song attribute; and
b2, obtain the first option content in response to a selection instruction for the at least one first option to display the song work on the work generation page.

After the first prompt information is input on the work generation page in an interactive manner, the input instruction of the first prompt information is generated, and accordingly, at least one first option is displayed on the work generation page in response to the input instruction, where the at least one first option corresponds to at least one song attribute.

Specifically, at least one option is provided under each song attribute for selection by the user. In addition, the number of song attributes displayed on the work generation page may also be set according to actual demands, which is not limited in any way herein.

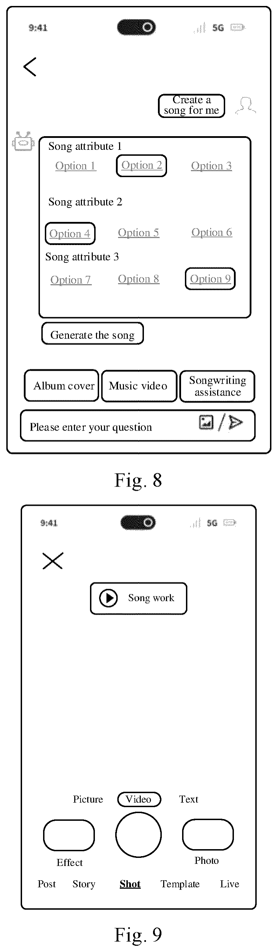

For example, as shown in Fig. 8, after the first prompt information "help me write a song" is input, a plurality of options available for selection under the song attribute 1 to the song attribute 3 are displayed on the work generation page. In Fig. 8, a total of three song attributes are set, and three options for selection are correspondingly provided under each song attribute. Specifically, the song attribute 1 corresponds to the option 1 to the option 3, the song attribute 2 corresponds to the option 4 to the option 6, and the song attribute 3 corresponds to the option 7 to the option 9.

The song attributes include, but are not limited to, the music style, a timbre, a scene, and the like, and the specific attribute contents are not limited. Of course, for each song attribute, in addition to some given options, a custom option may also be provided. Through interaction with the custom option, the song attribute corresponding to the custom option may be set.

The user selects the corresponding option according to demands to obtain the first option content, and accordingly, the attribute of the song work to be generated is given. The corresponding song work is generated according to the selected attribute, and displayed on the work generation page.

Of course, when the generated song work needs to be adjusted in some aspects, the adjustment prompt instruction may be further given to adjust the song work. Specific reference may be made to the above, which will not be described in detail herein.

After the first prompt information is input, at least one option is displayed on the work generation page, corresponding to at least one song attribute and by means of the display of the at least one first option, corresponding guidance is provided, so that the generation efficiency of the song work can be improved.

In some optional embodiments, when the first media work is the song work, the above step S105 includes: obtain the second media work in response to a video capture instruction on the work processing page, where the song work is used as background music of the second media work.

The song work generated on the work generation page may be used as background music of the video during publication. Specifically, after the song work is generated, the work processing page is accessed through interaction with the publication control. With regard to the generated first media work being the song work, the work processing page accessed may be understood as a video capture page. The user is guided to perform video capture on the video capture page, and the generated song work is used as the background music for capturing the video, so as to obtain the second media work.

For example, when the first media work is the song work, the work processing page, namely, the video capture page as shown in Fig. 9 may be displayed after interaction with the publication control. The video capture is achieved on this page through interaction to obtain the captured video. Further, the generated song work is used as background music for capturing the video. In addition, a capture mode may be set and the captured video may be edited on the video capture page, and the like, and the specific functions are set according to actual demands, which is not limited in any way herein.

With regard to the generated song work, the video is captured on the work processing page, and then the song work is used as the background music for capturing the video, so as to obtain the second media work, so that the fusion of the song work and the video is achieved.

While the manner in which the first media work is generated and published as the song work has been described above, in some optional embodiments, the first media work may also be a video work. Based on this, the input first material includes at least one selected from a group consisting of: a second song, a second picture and a second video, where the first media work is the video work.

The first material may be at least one selected from the group of the second song, the second picture and the second video. Similar to the above generation of the song work, the form included in the first material and the amount of the material in each form are set according to actual demands, which are not limited in any way herein. For example, when the first material used for generating the video work is the song, at least one song may be given; and when the first material used for generating the video work is the song and the picture, at least one song and at least one picture may be given.

The video work is generated by utilizing at least one selected from the group of the song, the picture and the video, so that the richness of the video work can be ensured.

In some optional embodiments, the above S103 includes: display the video work on the work generation page in response to input instructions of the first prompt information and the second song in the work generation page.

After the first prompt information is input, a prompt "select a song" is displayed on the work generation page. The "select a song" may be in the form of a control, and may also be a text prompt, and the like. When "select a song" is the control, the selection of the song may be achieved through interaction with the control; and when "select a song" is the text prompt, the input of the song may be achieved through an upload control in the work generation page, or the input of the song may also be achieved in a dragging manner, and the like. Of course, the input of the second song may also be achieved in other manners, and the specific form thereof is not limited in any way herein, which is specifically set according to actual demands.

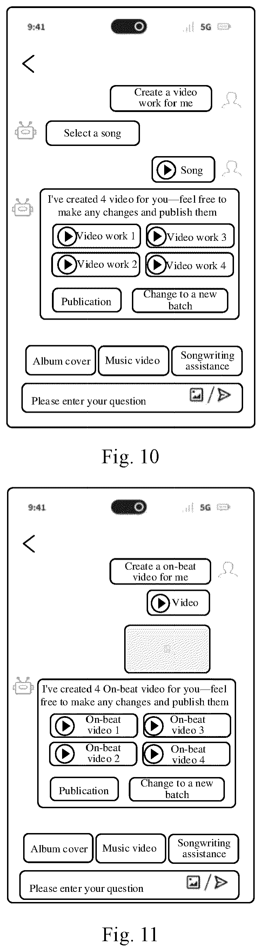

After the song is input, the generated video work is displayed on the work generation page in response to the input instructions of the first prompt information and the second song. For example, as shown in Fig. 10, the generated four video works, namely, the video work 1 to the video work 4, are displayed on the work generation page.

The generated video work 1 to the video work 4 may be published, or a prompt "change to a new batch" may also be given to regenerate the video works. Or, the adjustment prompt information may also be provided to adjust the generated video works, and the like. The specific manners are similar to the manners in which the song work is regenerated and adjusted described above, which will not be described in detail herein.

The video work is generated by utilizing the first prompt information and the song, so that the video work is related to the song, and the video work is generated on the basis of the song.

In some optional embodiments, the generated video work may also be an on-beat video in addition to the video. Specifically, the above S103 includes: display the video work on the work generation page in response to the input instruction of the first prompt information and an input instruction of the second picture and/or the second video in the work generation page, where the video work includes an on-beat video.

When the on-beat video is to be generated, the given first material includes the second picture and/or the second video, and the first prompt information may be "help me make an on-beat video" as described in Fig. 11. Of course, other content descriptions may also be adopted, which are not limited in any way herein.

After the first prompt information and the first material (including at least one of the second picture and the second video) are given, the generated on-beat videos, for example, the on-beat video 1 to the on-beat video 4 as displayed in Fig. 11, are displayed on the work generation page. Further, the on-beat video 1 to the on-beat video 4 may be published, and a prompt "change to a new batch" may also be given to regenerate the on-beat videos. Or, the adjustment prompt information may also be provided to adjust the generated on-beat videos, and the like. The specific manners are similar to the manners in which the song work is regenerated and adjusted described above, which will not be described in detail herein.

The on-beat video is generated by utilizing the first prompt information and one of the second picture and/or the second video, so that the richness of the generated video work is improved.

In some optional embodiments, after the video work is obtained, when the video work is to be published, the work processing page may be accessed to process the video work. Based on this, the above S105 includes: obtain the second media work in response to a video editing instruction on the work processing page, where the video editing instruction is used for editing the video work.

When the video work is generated, the work processing page accessed may be understood as a video editing page, the generated video work is edited, the video editing instruction is generated, and accordingly, the second media work is obtained in response to the video editing instruction.

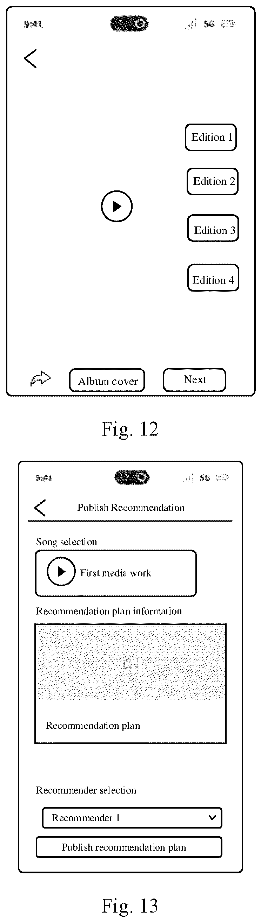

For example, as shown in Fig. 12, a plurality of editing controls are included on the video editing page, and each editing control is used for implementing a corresponding function. The video work may be played on the video editing page, and the playing may be paused at any time to edit video image frames, and perform other processing. The manner in which the video work is edited is not limited in any way herein, which may be specifically set according to actual demands.

With regard to the generated video work, the video work is edited on the work processing page, so as to obtain the second media work after editing for publication.

In some optional embodiments, an editing prompt function is also provided for a functional page in the media application. Specifically, the above method for generating a media work further includes:
c1, display a functional page in response to an interaction instruction for the functional page of the media application;
c2, acquire a current edited object in the functional page;
c3, display editing prompt information in the functional page in a case that an editing instruction for the current edited object is not acquired within a preset duration; and
c4, display an editing result of the current edited object on the functional page in response to an interaction instruction for the editing prompt information.

The functional pages of the media application include, but are not limited to, a publication page, an album setting page, a promotion planning page, and the like. The specific forms of the functional pages are not limited in any way herein, and a page in which the content needs to be edited may be referred to as the functional page.

For each edited object of the functional page, the position of a current interaction point is detected, the current edited object is determined by utilizing the position of the current interaction point, timing is started after the current edited object is determined, and a duration from the determination of the current edited object to the input of the editing result for the current edited object may be counted, which is referred to as a waiting duration.

The waiting duration is compared with a preset duration, and when the editing instruction for the current edited object is not acquired within the preset duration, the editing prompt information is displayed in the functional page, where the preset duration may be 5S, 10S, and the like, and the specific numerical value may be set according to actual demands.

When the editing instruction for the current edited object is not acquired within the preset duration, it indicates that the current edited object has not been input currently, and the editing prompt information needs to be provided. In addition, for different current edited objects, the provided editing prompt information is also different. The editing prompt information is used for providing prompt information for the current edited object, namely, providing certain editing guidance to the user.

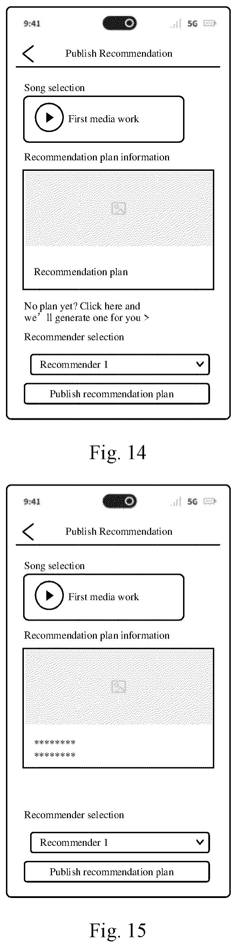

For example, a schematic diagram of a functional page is shown in Fig. 13. When it is determined that the current edited object is a recommended plan according to the position of the current interaction point, the counting of the waiting duration is triggered. When the waiting duration reaches the preset duration, the functional page as shown in Fig. 14 is displayed, and editing prompt information "no plan, click here to help you generate" is displayed at a corresponding position of the recommended plan. Through interaction with the editing prompt information, the functional page as shown in Fig. 15 is displayed, and the prompt information may be filled in the recommended plan.

It should be noted that the filled prompt information may also be modified in an interactive manner subsequently. Or, after interaction with the editing prompt information, an input box may be displayed. The prompt information is displayed in the input box, and the prompt information is modified through interaction with the input box. After it is confirmed that the prompt information in the input box is correct, the prompt information is filled in the current edited object.

For the current edited object in the functional page, when it is detected that the editing instruction for the current edited object is not acquired within the preset duration, it represents that there is a doubt about editing for the current edited object at this time, and accordingly, the editing prompt information is displayed in the functional page, so as to complete the editing more quickly.

As a specific application embodiment of the present disclosure, the media application is a short video application installed on a mobile phone. After the short video application is opened, the creation page is displayed. Through interaction with the creation control on the creation page, the work generation page is accessed. The generation for the media work is triggered on the work generation page according to actual demands. On the basis of obtaining the corresponding first media work, the first media work is published to access the work processing page, and the first media work is processed according to actual demands to obtain the second media work for publication.

In this embodiment, an apparatus for generating a media work is further provided, the apparatus is used for implementing the above embodiments, and what has already been explained will not be described in detail herein. As used hereinafter, the term "module" may implement a combination of software and/or hardware having a predetermined function. Although the apparatus described in the following embodiments is preferably implemented by software, implementations by hardware, or a combination of software and hardware, are also possible and are contemplated.

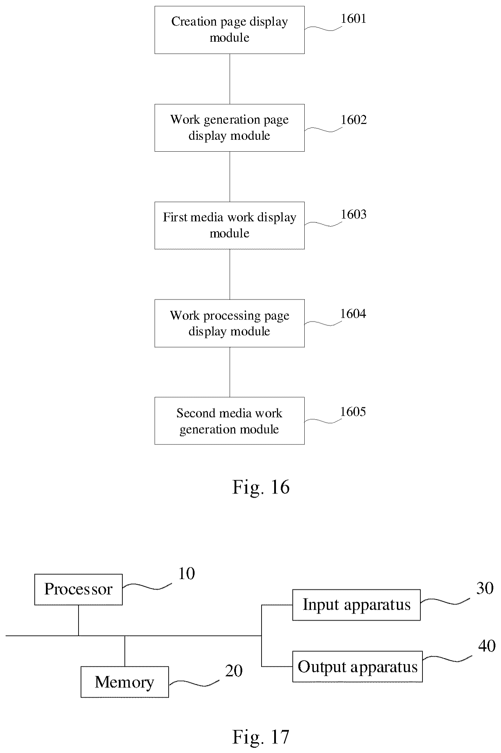

This embodiment provides an apparatus for generating a media work, as shown in Fig. 16, including:
a creation page display module 1601, configured to display a creation page in response to an operation instruction for a media application, where the creation page displays a creation control;
a work generation page display module 1602, configured to display a work generation page in response to an interaction instruction for the creation control;
a first media work display module 1603, configured to display a first media work on the work generation page in response to an input instruction of description information in the work generation page, where the description information includes prompt information and a material;
a work processing page display module 1604, configured to display a work processing page in response to a publication instruction of publishing the first media work to the media application; and
a second media work generation module 1605, configured to obtain a second media work in response to a processing instruction for the first media work on the work processing page, where the second media work is used for being published to the media application.

In some optional implementations, the first media work display module 1603 includes:
a first response module, configured to display the first media work on the work generation page in response to input instructions of first prompt information and a first material in the work generation page.

In some optional implementations, the first response module includes:
a first response sub unit, configured to display an optional media work on the work generation page in response to the input instructions of the first prompt information and the first material in the work generation page;
a second response sub unit, configured to display the first media work on the work generation page in response to an adjustment prompt instruction for the optional media work.

In some optional implementations, the first material includes at least one selected from a group consisting of: a first picture, a first video and a first option content, where the first media work is a song work.

In some optional implementations, in a case that the first material includes the first option content, the displaying the first media work on the work generation page in response to input instructions of first prompt information and a first material in the work generation page, includes:
a third response sub unit, configured to display at least one first option on the work generation page in response to the input instruction of the first prompt information in the work generation page, where the at least one first option corresponding to at least one song attribute;
a fourth response sub unit, configured to obtain the first option content in response to a selection instruction for the at least one first option to display the song work on the work generation page.

In some optional implementations, the second media work generation module 1605 includes:
a second response unit, configured to obtain the second media work in response to a video capture instruction on the work processing page, where the song work is used as background music of the second media work.

In some optional implementations, the first material includes at least one selected from a group consisting of: a second song, a second picture and a second video, where the first media work is a video work.

In some optional implementations, the first response unit includes:
a fifth response sub unit, configured to display the video work on the work generation page in response to input instructions of the first prompt information and the second song in the work generation page.

In some optional implementations, the first response unit includes:
a sixth response sub unit, configured to display the video work on the work generation page in response to the input instruction of the first prompt information and an input instruction of the second picture and/or the second video in the work generation page, where the video work includes an on-beat video.

In some optional implementations, the second media work generation module 1605 includes:
a third response unit, configured to obtain the second media work in response to a video editing instruction on the work processing page, where the video editing instruction is used for editing the video work.

In some optional implementations, the apparatus for generating a media work further includes:
a first response module, configured to display a functional page in response to an interaction instruction for the functional page of the media application;
an acquisition module, configured to acquire a current edited object in the functional page;
a display module, configured to display editing prompt information in the functional page in a case that an editing instruction for the current edited object is not acquired within a preset duration; and
a second response module, configured to display an editing result of the current edited object on the functional page in response to an interaction instruction for the editing prompt information.

Further functional descriptions of the various modules and units described above are the same as those in the corresponding embodiments described above, which will not be described in detail herein.

The apparatus for generating a media work in this embodiment is presented in the form of functional units, and the units herein refer to an application specific integrated circuit (ASIC), a processor which executes one or more software or fixed programs and a memory, and/or other devices which may provide the above functions.

An embodiment of the present disclosure further provides an electronic device having the above apparatus for generating a media work shown in Fig. 16.

With reference to Fig. 17, Fig. 17 is a schematic structural diagram of an electronic device provided in an optional embodiment of the present disclosure, and as shown in Fig. 17, the electronic device includes: one or more processors 10, a memory 20, and interfaces for connecting various components, including high-speed interfaces and low-speed interfaces. The various components are communicatively connected with each other by utilizing different buses, and may be installed on a common mainboard or installed in other manners according to needs. The processor may process instructions executed in the electronic device, including instructions stored in the memory or on the memory to display graphical information of a GUI on an external input/output apparatus (such as a display device coupled to the interface). In some optional embodiments, a plurality of processors and/or a plurality of buses may be used together with a plurality of memories when needed. Also, a plurality of electronic devices may be connected, each device provides part of necessary operation (such as being used as a server array, a set of blade servers, or a multi-processor system). One processor 10 is taken as an embodiment in Fig. 17.

The processor 10 may be a central processor, a network processor, or a combination thereof, where the processor 10 may further include a hardware chip. The above hardware chip may be an application specific integrated circuit, a programmable logic device, or a combination thereof. The above programmable logic device may be a complex programmable logic device, a field programmable gate array, generic array logic, or any combination thereof,

where the memory 20 has instructions executable by at least one processor 10 stored therein to cause the at least one processor 10 to execute and implement the method shown in the above embodiments.

The memory 20 may include a program storage area and a data storage area, where the program storage area may store an operating system and an application program required by at least one function; and the data storage area may store data created according to the use of the electronic device, and the like. In addition, the memory 20 may include a high-speed random access memory and may also include a non-transitory memory, such as at least one magnetic disk storage device, a flash memory device, or other non-transitory solid-state storage devices. In some optional embodiments, the memory 20 optionally includes memories remotely provided with respect to the processor 10, and these remote memories may be connected to the electronic device via a network. Instances of the above network include, but are not limited to, the Internet, an intranet, a local area network, a mobile communication network, and combinations thereof.

The memory 20 may include a volatile memory, such as a random access memory; the memory may also include a non-volatile memory, for example, a flash memory, a hard disk or a solid-state hard disk; and the memory 20 may further include a combination of the memories of the above types.

The electronic device further includes an input apparatus 30 and an output apparatus 40. The processor 10, the memory 20, the input apparatus 30 and the output apparatus 40 may be connected through buses or in other manners. The connection through the buses is taken as an embodiment in Fig. 17.

The input apparatus 30 may receive the input number or character information and generate key signal inputs related to user settings and function control of the electronic device, such as a touch screen, a keypad, a mouse, a track pad, a touch pad, an indication rod, one or more mouse buttons, a track ball and a joystick. The output apparatus 40 may include a display device, an auxiliary lighting apparatus (such as an LED), a tactile feedback apparatus (such as a vibration motor), and the like. The above display device includes, but is not limited to, a liquid crystal display, a light-emitting diode, a display and a plasma display. In some optional embodiments, the display device may be a touch screen.

An embodiment of the present disclosure further provides a computer-readable storage medium. The above method according to the embodiments of the present disclosure may be implemented in hardware and firmware, or implemented as being recordable in the storage medium, or implemented as computer codes which are downloaded via the network, originally stored in a remote storage medium or a non-transitory machine-readable storage medium and to be stored in a local storage medium, so that the method described herein may be processed by such software stored on a storage medium using a general-purpose computer, a special-purpose processor, or programmable or special-purpose hardware, where the storage medium may be a magnetic disk, an optical disk, a read-only memory, a random access memory, a flash memory, a hard disk or a solid-state hard disk, and the like; and further, the storage medium may further include a combination of the memories of the types described above. It should be understood that the computer, the processor, a microprocessor controller or programmable hardware includes a storage component which may store or receive software or computer codes, and the software or computer codes, when accessed and executed by the computer, the processor or the hardware, implement the method shown in the above embodiments.

A part of the present disclosure may be applied as a computer program product, such as a computer program instruction which, when executed by the computer, may call or provide the method and/or technical solution according to the present disclosure through the operation of the computer. It should be understood by those skilled in the art that the computer program instruction may exist in the computer-readable medium in the forms including, but not limited to, a source file, an executable file, an installation package file, and the like, and accordingly, the manner in which the computer program instruction is executed by the computer includes, but is not limited to: the computer executing the instruction directly, or the computer compiling the instruction and then executing the corresponding compiled program, or the computer reading and executing the instruction, or the computer reading and installing the instruction and then executing the corresponding installed program. Herein, the computer-readable medium may be any available computer-readable storage medium or communication medium accessible by the computer.

Although the embodiments of the present disclosure have been described in conjunction with the accompanying drawings, various modifications and variations may be made by those skilled in the art without departing from the spirit and scope of the present disclosure, and such modifications and variations all fall within the scope defined by the appended claims.

## Claims

1. A method for generating a media work, comprising:
displaying a creation page in response to an operation instruction for a media application, wherein the creation page displays a creation control(S101);
displaying a work generation page in response to an interaction instruction for the creation control(S102);
displaying a first media work on the work generation page in response to an input instruction of description information in the work generation page, wherein the description information comprises prompt information and a material(S103);
displaying a work processing page in response to a publication instruction of publishing the first media work to the media application(S104); and
obtaining a second media work in response to a processing instruction for the first media work on the work processing page, wherein the second media work is used for being published to the media application.

2. The method according to claim 1, wherein the displaying a first media work on the work generation page in response to an input instruction of description information in the work generation page, comprises:
displaying the first media work on the work generation page in response to input instructions of first prompt information and a first material in the work generation page.

3. The method according to claim 2, wherein the displaying the first media work on the work generation page in response to input instructions of first prompt information and a first material in the work generation page, comprises:
displaying an optional media work on the work generation page in response to the input instructions of the first prompt information and the first material in the work generation page; and
displaying the first media work on the work generation page in response to an adjustment prompt instruction for the optional media work.

4. The method according to claim 2, wherein the first material comprises at least one selected from a group consisting of: a first picture, a first video and a first option content, wherein the first media work is a song work.

5. The method according to claim 4, wherein in a case that the first material comprises the first option content, the displaying the first media work on the work generation page in response to input instructions of first prompt information and a first material in the work generation page, comprises:
displaying at least one first option on the work generation page in response to the input instruction of the first prompt information in the work generation page, wherein the at least one first option corresponding to at least one song attribute; and
obtaining the first option content in response to a selection instruction for the at least one first option to display the song work on the work generation page.

6. The method according to claim 4, wherein the obtaining a second media work in response to a processing instruction for the first media work on the work processing page, comprises:
obtaining the second media work in response to a video capture instruction on the work processing page, wherein the song work is used as background music of the second media work.

7. The method according to claim 2, wherein the first material comprises at least one selected from a group consisting of: a second song, a second picture and a second video, wherein the first media work is a video work.

8. The method according to claim 7, wherein the displaying the first media work on the work generation page in response to input instructions of first prompt information and a first material in the work generation page, comprises:
displaying the video work on the work generation page in response to input instructions of the first prompt information and the second song in the work generation page.

9. The method according to claim 7, wherein the displaying the first media work on the work generation page in response to input instructions of first prompt information and a first material in the work generation page, comprises:
displaying the video work on the work generation page in response to the input instruction of the first prompt information and an input instruction of the second picture and/or the second video in the work generation page, wherein the video work comprises an on-beat video.

10. The method according to claim 7, wherein the obtaining a second media work in response to a processing instruction for the first media work on the work processing page, comprises:
obtaining the second media work in response to a video editing instruction on the work processing page, wherein the video editing instruction is used for editing the video work.

11. The method according to any one of claims 1 to 10, further comprising:
displaying a functional page in response to an interaction instruction for the functional page of the media application;
acquiring a current edited object in the functional page;
displaying editing prompt information in the functional page in a case that an editing instruction for the current edited object is not acquired within a preset duration; and
displaying an editing result of the current edited object on the functional page in response to an interaction instruction for the editing prompt information.

12. An apparatus for generating a media work, comprising:
a creation page display module(1601), configured to display a creation page in response to an operation instruction for a media application, wherein the creation page displays a creation control;
a work generation page display module(1602), configured to display a work generation page in response to an interaction instruction for the creation control;
a first media work display module(1603), configured to display a first media work on the work generation page in response to an input instruction of description information in the work generation page, wherein the description information comprises prompt information and a material;
a work processing page display module(1604), configured to display a work processing page in response to a publication instruction of publishing the first media work to the media application; and
a second media work generation module(1605), configured to obtain a second media work in response to a processing instruction for the first media work on the work processing page, wherein the second media work is used for being published to the media application.

13. The apparatus according to claim 12, wherein the first media work display module comprises:
a first response module, configured to display the first media work on the work generation page in response to input instructions of first prompt information and a first material in the work generation page.

14. An electronic device, comprising:
a memory(20) and a processor(10) , wherein the memory(20) and the processor(10) are communicatively connected with each other, the memory(20) has computer instructions stored therein, and the processor(10) executes the computer instructions to execute the method for generating a media work according to any one of claims 1 to 11.

15. A computer-readable storage medium having computer instructions stored thereon, wherein the computer instructions are used for causing a computer to execute the method for generating a media work according to any one of claims 1 to 11.
